# EUROPÄISCHE PATENTANMELDUNG

(11) **EP 0 972 482 A1**
(43) Veröffentlichungstag der Anmeldung: **19.01.2000**
(21) Anmeldenummer: 99112869.5
(22) Anmeldetag: 03.07.1999
(51) Int. Cl.: A47J 41/00, G01F 23/72

(54) **Servierbehälter**

(30) Priorität: 11.07.1998 DE 19831254
(71) Anmelder: Planke, Michael, 74182 Obersulm (DE)
(72) Erfinder: Planke, Michael, 74182 Obersulm (DE)
(74) Vertreter: Munk, Ludwig, Dipl.-Ing.

(57) **Zusammenfassung**

Bei einem Servierbehälter für Getränke, insbesondere Isolierkanne, mit einem mittels eines Deckels (2) verschließbaren, bei Benutzung uneinsehbaren Aufnahmeraum (3), lässt sich dadurch ein hoher Benutzungskomfort erreichen, dass im Aufnahmeraum (3) ein Schwimmer (5) angeordnet ist, der mit einem den Deckel (2) durchgreifenden, in Längsrichtung verschiebbar angeordneten Anzeigestab (6) zusammenwirkt

## Beschreibung

Die Erfindung betrifft einen Servierbehälter für Getränke, insbesondere eine Isolierkanne, mit einem mittels eines Deckels verschließbaren, bei Benutzung uneinsehbaren Aufnahmeraum.

Bei den bekannten Gefäßen dieser Art, beispielsweise bei den derzeit gebräuchlichen Thermoskannen etc., ist der Füllstand des Aufnahmeraums von außen nicht erkennbar. Wenn man wissen will, ob eine derartige Kanne noch etwas von dem zugeordneten Getränk enthält, ist es erforderlich, die Kanne zu heben und zu schütteln und gefühlsmäßig abzuschätzen, welche Teilmenge sich noch in der Kanne befindet. Dies kann mühsam, zeitaufwendig und in vielen Fällen äußerst störend sein. Letzteres gilt insbesondere für Veranstaltungen mit mehreren Teilnehmern, wo in der Regel mehrere Kannen mit Kaffee etc. bereitstehen und dementsprechend die genannten Abschätzversuche mehrfach hintereinander wiederholt werden müssen.

Hiervon ausgehend ist es daher die Aufgabe der vorliegenden Erfindung, einen Servierbehälter eingangs erwähnter Art mit einfachen und kostengünstigen Mitteln so zu verbessern, dass von außen erkennbar ist, ob der Aufnahmeraum leer ist oder nicht.

Diese Aufgabe wird erfindungsgemäß dadurch gelöst, dass im Aufnahmeraum ein Schwimmer angeordnet ist, der mit einem den Deckel durchgreifenden, in Längsrichtung verschiebbar angeordneten Anzeigestab zusammenwirkt.

Diese Maßnahmen ergeben in vorteilhafter Weise eine Füllstandsanzeige, die auch schon aus größerer Entfernung erkennen lässt, ob sich im Aufnahmeraum noch etwas von dem zugeordneten Getränk befindet oder nicht. Es ist daher sichergestellt, dass auf Anhieb der richtige Behälter erkannt und erfasst wird. Dies gilt sowohl für den Fall der gewünschten Entnahme einer bestimmten Teilmenge des Getränks als auch für den Fall des Nachfüllens des Behälters. die erfindungsgemäßen Maßnahmen führen daher zu einem hohen Benutzungskomfort sowie zu einer nicht unbeträchtlichen Zeitersparnis sowohl in Büros als auch in Gaststätten und Privathaushalten. Die erfindungsgemäßen Maßnahmen gewährleisten daher auch eine gute Wirtschaftlichkeit.

Vorteilhafte Ausgestaltungen und zweckmäßige Fortbildungen der übergeordneten Maßnahmen sind in den Unteransprüchen angegeben. So kann der Anzeigestab in Längsrichtung verschiebbar in einem am Deckel angebrachten, zumindest am aufnahmeraumseitigen, unteren Ende verschlossenen Schutzrohr angeordnet und mit einem Magnetelement versehen sein. Der Schwimmer ist dabei in Längsrichtung verschiebbar auf dem Schutzrohr angeordnet und ebenfalls mit einem Magnetelement versehen. Diese Maßnahmen stellen sicher, dass Lekagen im Deckelbereich auf einfache Weise ausgeschlossen sind.

Eine weitere zweckmäßige Maßnahme kann darin bestehen, dass das Schutzrohr zumindest einen unteren Anschlag für den Schwimmer aufweist. Hierdurch ist sichergestellt, dass der Schwimmer nicht außer Eingriff mit dem Schutzrohr kommen kann, was eine hohe Bedienungsfreundlichkeit gewährleistet.

Vorteilhaft können die Magnetelemente von Anzeigestab und Schwimmer mit einander jeweils abstoßenden Polen einander zugewandt sein. Hierdurch wird einer Selbstblockierung auf einfache Weise entgegengewirkt. Die genannten Maßnahmen gewährleisten daher eine gute Leichtgängigkeit des Anzeigestabs und damit eine hohe Genauigkeit.

Zweckmäßig kann das Magnetelement des Anzeigestabs vom unteren Ende des Anzeigestabs zumindest um die Breite des Magnetelements des Schwimmers distanziert sein. Hierdurch wird sichergestellt, dass der Anzeigestab bei leerem Behälter bis zu seinem Auflaufen auf den Behälterboden in den Behälterinnenraum eintauchen kann.

In weiterer Fortbildung der übergeordneten Maßnahmen kann das Schutzrohr auch einen dem Schwimmer zugeordneten, oberen Anschlag aufweisen, der mit einer einer vorgegebenen Teilfüllung zugeordneten Füllhöhe entsprechendem Bodenabstand angeordnet ist. Hierdurch wird die Ausfahrbewegung des Anzeigestabs und damit die Länge seines maximalen Überstands über den Deckel begrenzt, was sich vorteilhaft auf die Vereinfachung der Handhabung auswirkt.

Eine weitere, ganz besonders zu bevorzugende Fortbildung der übergeordneten Maßnahme kann darin bestehen, dass das Schutzrohr den Deckel überragt und dass wenigstens der den Deckel zumindest um den Verschiebeweg des Schwimmers überragende, am oberen Ende verschlossene Bereich des Schutzrohrs transparent ist. Diese Maßnahmen ergeben in vorteilhafter Weise ein geschlossenes System, wodurch einer Wärmeübertragung vom Behälterinnenraum an die Umgebung und umgekehrt entgegengewirkt wird. Zudem ist hierbei sichergestellt, dass der Anzeigestab nicht verlorengehen bzw. beschädigt werden kann. Es wird daher auch eine hohe Funktionssicherheit gewährleistet.

Weitere vorteilhafte Ausgestaltungen und zweckmäßige Fortbildungen der übergeordneten Maßnahmen sind in den restlichen Unteransprüchen angegeben und aus der nachstehenden Beispielsbeschreibung anhand der Zeichnung näher entnehmbar.

In der nachstehend beschriebenen Zeichnung zeigen:
- Figur 1: einen Längsschnitt durch eine erfindungsgemäße Isolierkanne,
- Figur 2: eine vergrößerte Darstellung der Füllstandsanzeige-Einrichtung der Anordnung gemäß Figur 1 und
- Figur 3: eine Variante zu Figur 2.

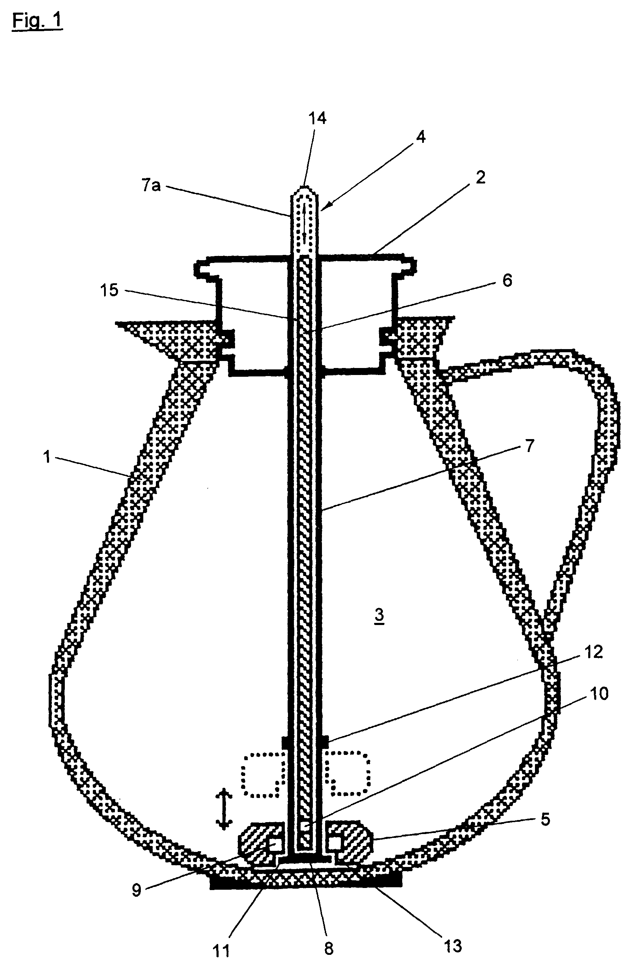

Die der Figur 1 beispielsweise zugrundeliegende Isolierkanne 1 enthält einen mittels eines Deckels 2 verschließbaren Aufnahmeraum 3, für das jeweils aufzunehmende Getränk, beispielsweise Kaffee. Die den Aufnahmeraum 3 begrenzenden Wände und der Deckel 2 sind nicht transparent. In der Regel handelt es sich dabei um mit einem Isoliermaterial gefüllte Hohlkammeranordnungen. Um dennoch sicherzustellen, dass von außen erkennbar ist, ob der Aufnahmeraum 3 noch etwas von dem zugeordneten Getränk, hier Kaffee, enthält, ist eine am Deckel 2 angebrachte, als ganzes mit 4 bezeichnete Füllstandsanzeige-Einrichtung vorgesehen.

Diese enthält einen im Aufnahmeraum 3 angeordneten, mit dem Füllstand steigenden und fallenden Schwimmer 5 und einen von diesem bewegbaren Anzeigestab 6. Der Anzeigestab 6 ist so lang, dass sich sein oberes Ende bei leerer Kanne, d.h bei der in Figur 1 mit durchgezogenen Linien angedeuteten, unteren Stellung, etwa auf dem Niveau der Oberkante des Deckels 2 befindet. Wenn der Schwimmer 5 steigt, wie in Figur 1 mit unterbrochenen Linien angedeutet ist, wird der Anzeigestab 6 mitgenommen, wodurch sein oberer Endbereich oberhalb der Oberkante des Deckels 2 sichtbar wird, wie in Figur 1 ebenfalls mit unterbrochenen Linien angedeutet ist. Die Länge des sichtbaren Bereichs des Anzeigestabs 6 entspricht dabei dem Füllstand im Aufnahmeraum 3.

Zweckmäßig ist die Ausfahrlänge des Anzeigestabs 6 so begrenzt, dass sie einem Mitdestfüllstand von beispielsweise vier Tassen entspricht. Der Anzeigestab 6 beginnt daher erst zu fallen, wenn dieser Mindestfüllstand unterschritten wird. Selbstverständlich wäre es auch denkbar, den Anzeigestab 6 mit einer Skala zu versehen, auf welcher der vorhandene Restinhalt des Aufnahmeraums 3 abgelesen werden kann.

Im dargestellten Beispiel ist am Deckel 2 ein in den Aufnahmeraum 3 hineinragendes Schutzrohr 7 angebracht, in welchem der Anzeigestab 6 in Richtung seiner Längsachse bewegbar angeordnet ist und auf welchem der Schwimmer 5 in Längsrichtung verschiebbar aufgenommen ist. Das Schutzrohr 7 ist zumindest an seinem unteren, aufnahmeraumseitigen Ende mit einem Verschluss 8 versehen. Hierdurch ist sichergestellt, dass das Schutzrohr 7 mit dem Deckel 2 eine flüssigkeitsdichte Einheit bildet. Der innerhalb des Schutzrohrs 7 angeordnete Anzeigestab 6 und der außerhalb des Schutzrohrs 7 angeordnete Schwimmer 7 wirken auf magnetischem Wege zusammen. Hierzu sind der Schwimmer 5 und der Anzeigestab 6 mit Magnetelementen 9, 10 versehen. Diese sind zweckmäßig so angeordnet, dass sie sich gegenseitig abstoßen. Dies wird dadurch erreicht, dass die jeweils gleichen Pole einander zugewandt sind.

Das Magnetelement 10 des Anzeigestabs 6 ist etwa um die Breite des Magnetelements 9 des Schwimmers 5 vom unteren Ende des Anzeigestabs 6 distanziert, so dass dieser bei leerer Kanne mit seinem unteren Ende entgegen der Wirkung der Magnetkräfte auf den unteren Verschluß 8 des Schutzrohrs 7 auflaufen kann und erst mitgenommen wird, wenn sich bereits eine untere Minimalmenge im Aufnahmebereich befindet, was sich vorteilhaft auf die Bedienungsfreundlichkeit und Funktionssicherheit auswirkt.

Der Schwimmer 5 ist zwischen zwei Anschlägen 11, 12 bewegbar. Zur Bildung des unteren Anschlags 11 kann die den unteren Abschluss 8 des Schutzrohrs 7 bildende Platte gegenüber dem Schutzrohr 7 flanschartig vorspringen. Der untere Anschlag 11 stellt sicher, dass der Schwimmer 5 nicht verloren gehen kann. Der Schwimmer 5 ist im dargestellten Beispiel mit einer stufenförmigen Ausnehmung 13 versehen, in die der Anschlag 11 eintauchen kann. Hierdurch ist sichergestellt, dass der Schwimmer 5 bei leerer Kanne bis zum Kannenboden absinken kann. Der obere Anschlag 12 wird durch einen umlaufenden Bund des Schutzrohr 7 gebildet. Dieser Anschlag 12 ist so positioniert, dass die Steigbewegung des Schwimmers 5 gestoppt wird, wie oben schon erwähnt wurde, wenn ein vorgegebener Mindestinhalt des Aufnahmeraums 3 erreicht ist, beispielsweise vier Tassen. Durch den Anschlag 12 wird auch die Ausfahrlänge des Anzeigestabs 6 entsprechend begrenzt. Diese entspricht dem maximalen Hub des Schwimmers 5.

Im dargestellten Beispiel durchgreift das Schutzrohr 7 den Deckel 2 und besitzt einen die Deckeloberkante überragenden Ansatz 7a, der oben geschlossen ist, wie bei 14 angedeutet ist. Hierdurch ergibt sich ein dem Anzeigestab 6 zugeordneter, geschlossener Aufnahmekanal 15. Dies gewährleistet eine geschützte Anordnung des Anzeigestabs 6 und damit eine besonders hohe Funktionssicherheit. Gleichzeitig lässt sich durch die Schaffung eines geschlossenen Systems die Bildung einer Wärmebrücke vermeiden. In manchen Fällen kann es in diesem Zusammenhang zweckmäßig sein, den Aufnahmekanal 15 zu evakuieren. Dabei ergibt sich zudem eine besonders hohe Leichtgängigkeit des Anzeigestabs 6. Auch eine Füllung mit einem Isoliergas wäre denkbar. Der über den Deckel 2 vorstehende Bereich des Schutzrohrs 7 , hier der Ansatz 7a, muss selbstverständlich aus transparentem Material bestehen, das den Blick zum Anzeigestab 6 freigibt. Dessen oberes Ende kann zweckmäßig so eingefärbt sein, beispielsweise durch Verwendung einer Signalfarbe, dass sich gute Sichtverhältnisse ergeben.

Der dem Anzeigestab 6 zugeordnete Aufnahmekanal 15 und damit die maximale Verschieblichkeit des Anzeigestabs 6 werden hier durch den unteren und oberen Abschluss 8 bzw. 14 des Schutzrohrs 7 begrenzt. Der dem Schwimmer 5 zugeordnete, obere Anschlag 12 ist dabei so angeordnet, dass die Hubbewegung des Schwimmers 5 zumindest mit dem Auflaufen des Anzeigestabs 6 auf den oberen Abschluss 14 des Schutzrohrs 7 endet. Hierdurch ist sichergestellt, dass die Magnetelemente 9, 10 einander nicht überfahren können, sondern in der gewünschten Wirkverbindung bleiben.

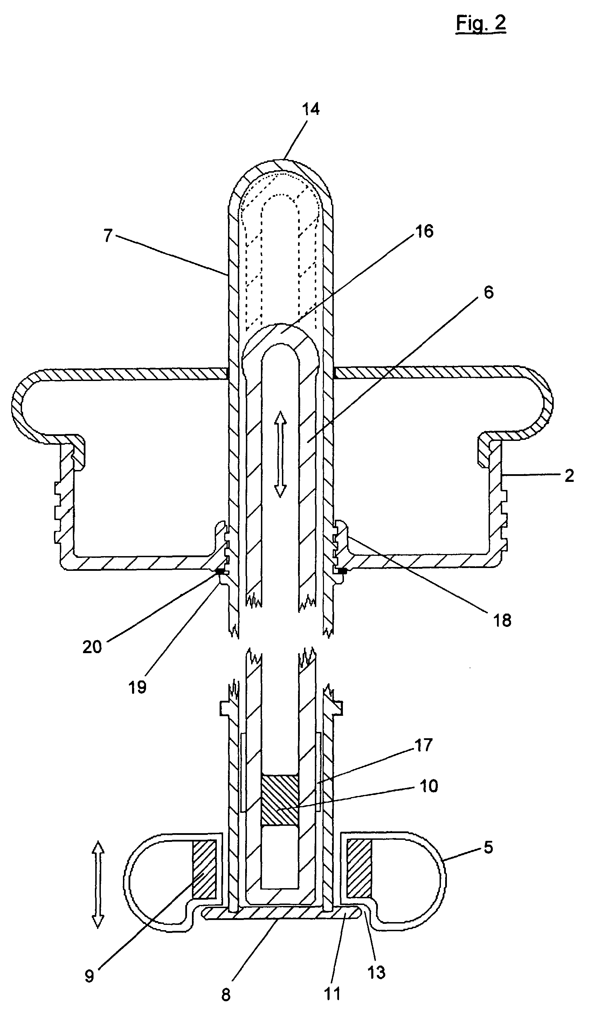

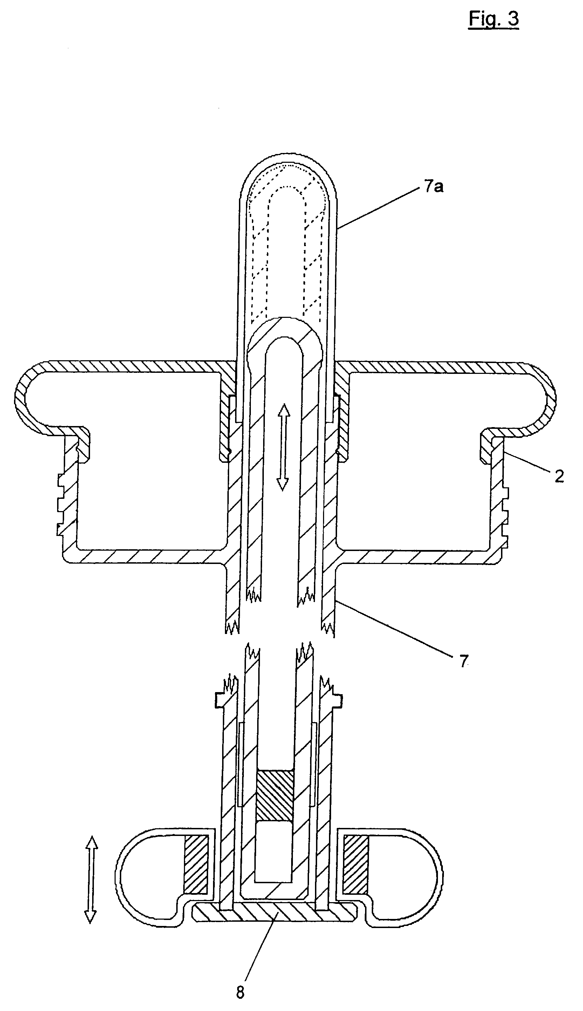

Der Anzeigestab 6 kann vorteilhaft, wie die Figuren 2 und 3 zeigen, einen rohrförmigen Querschnitt aufweisen. Dies ergibt hohe Stabilität bei geringem Gewicht. Das obere Ende eines derartig ausgebildeten Anzeigestabs 6 kann, wie die Figuren 2 und 3 weiter zeigen, eine kopfartige Verdickung 16 aufweisen, was eine besonders gute Erkennbarkeit ergibt und gleichzeitig eine gewisse Führung des Anzeigestabs 6 bewerkstelligt. Dieser kann zusätzlich mit in Längsrichtung verlaufenden Führungsrippen 17 versehen sein. Diese können über die ganze Länge durchgehen oder auf eine Teillänge begrenzt sein.

Bei der Ausführung gemäß Figur 2 ist das den Anzeigestab 6 enthaltende Schutzrohr 7 als mit dem Deckel 2 verschraubbare Baueinheit ausgebildet. Der Deckel 2, der aus einem Unterteil und einem hieran festlegbaren Oberteil besteht, besitzt eine unterteil- und oberteilseitige Durchgangsausnehmung, durch welche das Schutzrohr durchgeführt ist. Im Bereich der unterteilseitigen Durchgangsausnehmung ist ein diese verbreitender Kragen 18 vorgesehen, der mit einem Innengewinde versehen ist, in das ein entsprechendes Außengewinde des Schutzrohrs 7 bis zu einem durch einen Bund 19 gebildeten Anschlag einschraubbar ist. Zur Gewährleistung einer zuverlässigen Abdichtung kann zwischen dem Bund 19 und der zugeordneten, deckelseitigen Gegenfläche ein Dichtring 20 eingelegt sein.

Der obere Abschluß 14 des Schutzrohrs 7 ist hier als angeformte Kuppe ausgebildet. Der untere Abschluss 8 des Schutzrohrs 7 ist als nachträglich angesetzte Platte ausgebildet. Dies ermöglicht es, den Anzeigestab 5 im Schutzrohr 7 und den Schwimmer 5 auf dem Schutzrohr 7 in Stellung bringen zu können. Die den unteren Abschluss 8 bildende Platte kann beispielsweise angeschweißt oder angeklebt sein. Da der den Deckel 2 überragende Bereich des Schutzrohrs 7 mit dem inneren Bereich des Schutzrohrs 7 einteilig ausgebildet ist, muss hier das komplette Schutzrohr 7, abgesehen vom unteren Abschluß 8 , aus transparentem Material bestehen.

Die Ausführung gemäß Figur 3 unterscheidet sich von der Ausführung gemäß Figur 2 dadurch, dass das Schutzrohr 7 teilweise an den Deckel 2 angeformt ist. Hierzu ist das Deckelunterteil mit nach unten und oben vorspringenden Stutzen versehen. Der untere Stutzen ist an seinem unteren Ende mit dem unteren Abschluss 8 versehen, der wiederum als nachträglich anbringbare Platte ausgebildet ist. Der obere Stutzen greift in einen Kragen des Deckeloberteils ein und trägt einen aus transparentem Material bestehenden, kappenförmigen Ansatz 7a. Der untere Bereich des Schutzrohrs 7 und die hiermit einteilig ausgebildeten Deckelemente können dabei aus anderem, nicht transparentem Material bestehen.

Vorstehend sind zwar einige bevorzugte Ausführungsbeispiele der Erfindung näher erläutert, ohne dass jedoch hiermit eine Beschränkung verbunden sein soll.

Vielmehr stehen dem Fachmann eine Reihe von Möglichkeiten zur Verfügung, um die erfindungsgemäße Lösung an die Verhältnisse des Einzelfalls anzupassen.

## Patentansprüche

1. Servierbehälter für Getränke, insbesondere Isolierkanne, mit einem mittels eines Deckels (2) verschließbaren, bei Benutzung uneinsehbaren Aufnahmeraum (3), **dadurch gekennzeichnet, dass** im Aufnahmeraum (3) ein Schwimmer (5) angeordnet ist, der mit einem den Deckel (2) durchgreifenden, in Längsrichtung verschiebbar angeordneten Anzeigestab (6) zusammenwirkt.

2. Servierbehälter nach Anspruch 1, **dadurch gekennzeichnet, dass** der vorzugsweise einen Hohlquerschnitt aufweisende Anzeigestab (6) in Längsrichtung verschiebbar in einem am Deckel (2) angebrachten, zumindest am aufnahmeraumseitigen, unteren Ende verschlossenen Schutzrohr (7) angeordnet und mit einem Magnetelement (10) versehen ist und dass der Schwimmer (5) in Längsrichtung verschiebbar auf dem Schutzrohr (7) aufgenommen und ebenfalls mit einem Magnetelement (9) versehen ist.

3. Servierbehälter nach einem der vorhergehenden Ansprüche, **dadurch gekennzeichnet, dass** der Anzeigestab (6), der vorzugsweise als Skalenträger ausgebildet ist, einen sichtbar hervorgehobenen Anzeigekopf (16) aufweist..

4. Servierbehälter nach einem der vorhergehenden Ansprüche, **dadurch gekennzeichnet, dass** das Schutzrohr (7) zumindest einen unteren Anschlag (11) für den Schwimmer (5) aufweist, der vorzugsweise mit einer Ausnehmung (13) versehen ist, in der der untere Anschlag (11) aufnehmbar ist.

5. Servierbehälter nach einem der Ansprüche 2 bis 4, **dadurch gekennzeichnet, dass** die Magnetelemente (9,10) von Schwimmer (5) und Anzeigestab (6) mit jeweils einander abstoßenden Polen einander zugewandt sind, wobei vorzugsweise das Magnetelement (10) des Anzeigestabs (6) vom unteren Ende des Anzeigestabs (6) zumindest um die Breite des Magnetelements (9) des Schwimmers (5) distanziert ist.

6. Servierbehälter nach einem der Ansprüche 2 bis 5, **dadurch gekennzeichnet, dass** das Schutzrohr (7) einen dem Schwimmer (5) zugeordneten, oberen Anschlag (12) aufweist, der mit einer einer vorgegebenen Teilfüllung zugeordneten Füllhöhe entsprechendem Bodenabstand angeordnet ist.

7. Servierbehälter nach einem der Ansprüche 2 bis 6, **dadurch gekennzeichnet, dass** das Schutzrohr (7) den Deckel (2) überragt und dass wenigstens der den Deckel (2) zumindest um den Verschiebeweg des Schwimmers (5) überragende Bereich (7a) des Schutzrohrs (7) oben verschlossen ist und aus transparentem Material besteht.

8. Servierbehälter nach Anspruch 7, **dadurch gekennzeichnet, dass** das Schutzrohr (7) mit dem Deckel (2) verschraubt ist und dass die dem Schutzrohr (7) zugeordnete Durchgangsausnehmung des Deckels (2) mittels eines im Bereich der Verschraubung vorgesehenen Dichtrings (20) abgedichtet ist.

9. Servierbehälter nach Anspruch 7 oder 8, **dadurch gekennzeichnet, dass** der Innenraum (15) des Schutzrohrs (7) evakuiert ist.

10. Servierbehälter nach einem der Ansprüche 7 bis 9, **dadurch gekennzeichnet, dass** das Schutzrohr (7) aus wenigstens zwei aneinander ansetzbaren Teilen besteht, wobei vorzugsweise wenigstens ein Teil des Schutzrohrs (7) an ein Element des Deckels (2) angeformt ist.
